# EUROPÄISCHE PATENTSCHRIFT

(11) **EP 2 437 992 B1**
(45) Veröffentlichungstag und Bekanntmachung des Hinweises auf die Patenterteilung: **17.04.2013**
(21) Anmeldenummer: 10732243.0
(22) Anmeldetag: 02.06.2010
(51) Int. Cl.: B65G 23/12, B65G 23/10

(54) **FÖRDERVORRICHTUNG ZUM TRANSPORT VON STÜCKGÜTERN**
CONVEYING APPARATUS FOR TRANSPORTING PIECE GOODS
DISPOSITIF DE TRANSPORT DESTINÉ À TRANSPORTER DES MARCHANDISES

(30) Priorität: 03.06.2009 AT 8552009
(43) Veröffentlichungstag der Anmeldung: 11.04.2012
(73) Patentinhaber: TGW Mechanics GmbH, 4600 Wels (AT)
(72) Erfinder: WOLKERSTORFER, Christoph, A -4600 WeIs (AT); KRIECHBAUM, Thomas, A-4710 Grieskirchen (AT)
(74) Vertreter: Burger, Hannes
(86) Internationale Anmeldenummer: PCT/AT2010/000195
(87) Internationale Veröffentlichungsnummer: WO 2010/138984

(56) Entgegenhaltungen:
- EP-A2- 1 132 321
- DE-A1- 3 421 413
- DE-A1- 3 734 560
- GB-A- 2 273 692
- US-A- 5 938 006
- US-A- 5 984 084

## Beschreibung

Die Erfindung betrifft eine Fördervorrichtung, wie im Oberbegriff des Anspruches 1 beschrieben.

Die US 5,938,006 A offenbart eine gattungsgemäße Fördervorrichtung, welche Trag- und Antriebsrollen und ein um diese geführtes, endlos umlaufendes Transportband umfassen, letzteres ein unteres Trum und ein oberes Trum ausbildet.

Die DE 43 00 271 A1 offenbart eine Fördervorrichtung mit einem Rahmen, Trag- und Antriebsrollen und einem um die Trag- und Antriebsrollen geführten, endlos umlaufenden Transportband, welches ein unteres Trum und ein oberes Trum aufweist. Die Antriebsrollen sind paarweise übereinander zwischen den Tragrollen angeordnet und werden durch separate Stelleinheiten gegen die Ober- und Unterseite vom unteren Trum angedrückt. Um mit dieser bekannten Fördervorrichtung ein beschränktes Sortiment Stückgüter unterschiedlichen Fördergewichtes und/oder unterschiedlicher Abmessungen fördern zu können, ist das Transportband an seiner Lauffläche mit einem umlaufenden Führungssteg versehen. Bedingt durch diese bauliche Maßnahme sind zwangsweise mehrere Antriebsrollen, Antriebe und Stelleinheiten erforderlich, was einerseits zu höheren Betriebskosten und andererseits zu einem komplexeren Aufbau der Fördervorrichtung führt. Zudem kann das obere Trum zwischen den Tragrollen durchhängen, wenn auch nur eine geringfügige Überschreitung vom maximal zulässigen Fördergewicht auftritt.

Ein Kurvengurtförderer ist aus der DE 42 44170 A1 bekannt, bei welchem ein endlos umlaufendes Transportband um Trag- und Antriebsrollen geführt wird. Die Antriebsrolle ist unterhalb einer Tragrolle angeordnet, wobei die Antriebsrolle durch eine Stelleinheit auf das untere Trum angedrückt wird. Die zusätzliche Tragrolle zwischen den in den Endbereichen einer Förderzone angeordneten Tragrollen führt zu einem komplexeren Aufbau des Kurvengurtförderers.

Aus der US 7,364,035 B2 ist eine Fördervorrichtung bekannt, die als Stauförderer ausgebildet ist und in Förderrichtung der Stückgüter eine Vielzahl von Förderzonen sowie einen sich entlang der Förderzonen über die gesamte Länge der Fördervorrichtung erstreckenden, kontinuierlich umlaufenden Antriebsriemen aufweist. Jede Förderzone umfasst relativ zur Förderrichtung in ihrem ersten Endbereich eine Antriebsrolle und in ihrem zweiten Endbereich eine Tragrolle sowie zwischen den Endbereichen weitere Tragrollen und ein um diese Rollen geführtes, endlos umlaufendes Transportband für den Transport der Stückgüter. Die Antriebsrolle weist eine Kupplungsrolle und einen Rollenkörper auf, die je auf einer feststehenden Achse drehbar gelagert sind. Die Kupplungsrolle wird durch den Antriebsriemen kontinuierlich angetrieben und ist über eine elektromagnetische Kupplung mit dem antreibbaren Rollenkörper kuppelbar. Hierzu wird der Antriebsriemen im Bereich der Antriebsrolle in jeder Förderzone mittels einer Andrückrolle gegen die Kupplungsrolle angedrückt.

Die US 6,811,018 B2 und US 2007/0119690 A1 zeigen jeweils eine Fördervorrichtung, die als Stauförderer ausgebildet ist und in Förderrichtung der Stückgüter eine Vielzahl von Förderzonen aufweist. Jede Förderzone umfasst relativ zur Förderrichtung in ihrem ersten Endbereich eine Antriebsrolle und in ihrem zweiten Endbereich eine Tragrolle sowie zwischen den Endbereichen weitere Tragrollen und ein um diese Rollen geführtes, endlos umlaufendes Transportband für den Transport der Stückgüter.

Bei diesen bekannten Fördervorrichtungen wird das Transportband mit einer Vorspannkraft um die Antriebsrolle und die Tragrolle gespannt, die ausreichend hoch gewählt werden muss, damit das Antriebsmoment von der Antriebsrolle auf das Transportband übertragen wird. Andererseits darf die Antriebsrolle nicht mit einer zu hohen Vorspannkraft beansprucht werden, ansonsten auf die Antriebsrolle eine unzulässige Biegebeanspruchung ausgeübt wird. Ein wesentlicher Nachteil der bekannten Fördervorrichtungen liegt auch darin, dass zum Ausbau der Antriebsrolle das Transportband entspannt werden muss. Mit anderen Worten muss nach dem Austausch der Antriebsrolle die Vorspannkraft im Transportband neuerlich eingestellt werden, was sehr zeit- und kostenintensiv ist.

Die EP 1 223 120 A2 offenbart eine Fördervorrichtung mit einem Rahmen, einer Vielzahl von Förderzonen, wovon eine jede Förderzone in ihren gegenüberliegenden Endbereichen Antriebsrollen und zwischen den Endbereichen eine weitere Antriebsrolle sowie ein, um die Antriebsrollen geführtes, endlos umlaufendes Transportband umfasst. Die hohe Anzahl von Antriebsrollen führt zu einer sehr komplexen Bauweise der bekannten Fördervorrichtung.

Aus der GB 2 273 692 A ist ein Kurvengutförderer bekannt, welcher eine Antriebsrolle und ein an den Tragrollen geführtes, endlos umlaufendes Transportband aufweist, wobei die Antriebsrolle unterhalb einer Tragrolle angeordnet ist und durch ein Anpresselement gegen die Tragrolle an das untere Trum des Transportbandes angedrückt wird.

In der EP 1 132 321 A ist ein Rollenförderer mit mehreren Förderzone offenbart, wobei jede dieser Förderzonen eine Vielzahl von Tragrollen und eine antreib- und bremsbare Rolle aufweist. Sowohl die Tragrollen als auch die antreib- und bremsbare Rolle einer Förderzone sind jeweils mit zwei radial umlaufenden Rillen versehen, in denen Rundriemen geführt sind, sodass benachbarte Rollen miteinander gekoppelt sind.

Die US 5,984,084 A beschreibt einen Kurvengutförderer, bei welchem ein endloses, gebogenes Transportband zwischen zwei winkelig zueinander angeordneten Umlenkrollen umläuft. Zwischen den Umlenkrollen und unter dem oberen Trum des Transportbandes ist eine stationäre ebene Tragfläche angeordnet, welche das obere Trum abstützt. Die innere Stirnseite des gebogenen Transportbandes wird mittels Führungsrollen abgestützt. Im Bereich der äußeren Stirnseite des gebogenen Transportbandes ist zwischen dem oberen und dem unteren Trum zumindest eine Antriebsrolle vorgesehen.

Die DE 37 34 560 A1 zeigt eine Fördervorrichtung, bei dem ein endloses Transportband um zwei äußere Umlenkrollen umläuft. Zwischen den Umlenkrollen ist eine Antriebsrolle und oberhalb und unterhalb zur Antriebsrolle liegenden Andrückrollen angeordnet Das obere Trum des Transportbandes liegt an der Oberseite der Antriebsrolle an und wird von der oberen Andrückrolle an die Oberseite der Antriebsrolle gepresst. In gleicher Weise verläuft das untere Trum des Transportbandes entlang der Unterseite der Antriebsrolle und wird von der unteren Andrückrolle an die Unterseite der Antriebsrolle angepresst.

In der DE 34 21413 A1 ist ein Kurvenbandförderer offenbart, bei dem ein endloses Transportband zwischen zwei äußeren Umlenkrollen umläuft, wobei die Achsen der Umlenkrollen winkelig zueinander angeordnet sind und dadurch ein gebogenes Transportband ausgebildet ist. Das Transportband ist in seinem äußeren gebogenen Randbereich mit mehreren Führungsrollen bestückt, deren Achsen vertikal verlaufen und die entlang einer gebogenen Führungsschiene bewegt werden. Das Transportband wird über eine Antriebsrolle angetrieben, welche auf halbem Weg zwischen den Umlenkrollen im äußeren Randbereich des Transportbandes liegt.

Die US 3,422,947 A offenbart eine Fördervorrichtung mit zu einer endlos umlaufenden Transportkette gelenkig miteinander verbundenen Lamellen und in den gegenüberliegenden Endbereichen angeordneten Wellen mit daran angeordneten Kettenrädern, um welche die Transportkette mit Kettensträngen geführt ist. Die Welle HS im rechten Umlenkbereich ist als Antriebswelle ausgebildet, welche mit einem Elektromotor in Verbindung steht. Die Antriebskraft zwischen der Transportkette und der Antriebswelle wird durch eine Formschlusskoppelung übertragen. Die Transportkette wird am oberen Trum über Rollen und am unteren Trum zusätzlich über eine angeordnete Rollenanordnung geführt.

In der WO 2006/110030 A1 ist eine Fördervorrichtung (Zweispurfördervorrichtung) offenbart, die mit gegenseitigem Abstand parallel laufende Förderstränge umfasst, wobei jeder Förderstrang ein U-förmig ausgebildetes Rahmenprofil und zwischen den Schenkeln mit Längsabstand angeordnete, drehbar gelagerte Rollen und ein endlos umlaufendes Transportband umfasst.

Eine Fördervorrichtung mit einem um in den Endbereichen angeordneten Umlenkrollen geführten Transportband ist auch aus der US 3,877,568 A bekannt, bei dem die Umlenkrolle im rechten Endbereich der Fördervorrichtung angeordnet und mit einem Antrieb gekoppelt ist. Zudem ist das Transportband am oberen Trum über erste Rollen und am unteren Trum über zweite Rollen geführt.

Schließlich ist in der FR 2,169,614 A eine Fördervorrichtung offenbart, bei der das Antriebsmoment von einer in einem der Endbereiche der Fördervorrichtung angeordneten Rolle übertragen wird.

Der vorliegenden Erfindung liegt die Aufgabe zu Grunde, eine einfach aufgebaute Fördervorrichtung zu schaffen, die auch bei niedriger Vorspannung im Transportband einen zuverlässigen Betrieb erlaubt.

Die Aufgabe der Erfindung wird durch die Merkmale des Anspruches 1 gelöst. Von Vorteil ist, dass die zur Übertragung eines Drehmomentes notwendige Reibkraft zwischen der Unterseite der Antriebsrolle und dem Transportband nicht aus der Vorspannkraft im Zugmittel resultiert, sondern alleinig durch die vom Anpresselement auf das untere Trum des Transportbandes ausgeübte Anpresskraft. Das Anpresselement steht mit dem unteren Trum des Transportbandes ständig im Eingriff, um den notwendigen Reibschluss zur Übertragung eines Drehmomentes (Antriebskraft) von der Antriebsrolle auf das Transportband zu erzeugen. Die Antriebsrolle wird gegenüber solchen aus dem Stand der Technik bekannten Fördervorrichtungen, wo die Antriebsrolle innerhalb einer Förderzone in einem der gegenüberliegenden Endbereiche angeordnet ist und der Vorspannkraft im Zugmittel Stand halten muss, einer wesentlich geringeren Biegebeanspruchung ausgesetzt. Die Antriebsrolle wird gemäß der Erfindung im Vergleich zur Vorspannkraft im Transportband mit einer niedrigeren Anpresskraft belastet und damit die Biegebeanspruchung auf die Antriebsrolle wesentlich reduziert. Dadurch kann die Nennbreite der Fördervorrichtung erhöht werden, ohne den konstruktiven Aufbau der Antriebsrolle verändern zu müssen. Nach der erfindungsgemäßen Ausführung sind innerhalb einer Förderzone in den gegenüberliegenden Endbereichen frei drehbare (nicht motorisch angetriebene) Tragrollen vorgesehen, welche ausschließlich der Umlenkung des endlos umlaufenden, antreibbaren Transportbandes dienen, während der Antrieb des Transportbandes durch die zwischen den Tragrollen angeordnete Antriebsrolle erreicht wird. Nachdem die Antriebskraft nicht durch Umschlingung einer, in einem der Endbereiche der Förderzone angeordnete Antriebsrolle übertragen wird, kann die Vorspannung im Transportband niedrig gewählt werden. Ferner ist es beispielsweise zu Wartungszwecken möglich, die Antriebsrolle aus einer Förderzone zu entfernen, ohne dabei die Vorspannung im Transportband zu verändern. Ein langwieriges Einstellen der Vorspannung im Transportband, insbesondere durch Messen der Eigenschwingungsfrequenz, durch Fachpersonal kann entfallen. Die Anordnung der Antriebsrolle zwischen dem unteren und oberen Trum des Transportbandes einerseits und zwischen den Tragrollen in den Endbereichen der Förderzone andererseits hat zudem den Vorteil, dass das Stückgut mit seinem Gewicht auch auf der Antriebsrolle auflastet und damit der Reibschluss zwischen dem oberen Trum und der Oberseite der Antriebsrolle erhöht wird, sobald ein Stückgut entlang einer Förderzone transportiert wird. Es besteht also eine Antriebskoppelung zwischen der Antriebsrolle und dem Transportband sowohl am unteren Trum als auch am oberen Trum. Somit ermöglicht die Antriebsrolle nicht nur eine Stützfunktion für das Stückgut, sondern auch eine zuverlässige Antriebsfunktion. Die Fördervorrichtung kann daher je nach Anwendung im einfachsten Fall ausschließlich eine Antriebsrolle und zwei Tragrollen umfassen. Auch kann an einer bestehenden Fördervorrichtung sehr einfach die erfindungsgemäße Anordnung der Trag- und Antriebsrolle geändert und das Anpresselement nachgerüstet werden.

Eine optimale Einstellung einer Anstellkraft des Anpresselementes auf das Transportband wird erreicht, wenn für das Anpresselement eine Stelleinheit vorgesehen ist. Mittels der Stelleinheit wird das Anpresselement auch bei durch Verschleiß oder Längendehnungen bei Temperaturunterschieden hervorgerufene Maßänderungen oder fertigungsbedingte Toleranzabweichungen des Transportbandes stets mit einer definierten Anstellkraft gegen das untere Trum angestellt und damit ein ausreichend hoher Reibschluss zwischen dem unteren Trum und der Antriebsrolle hergestellt

Da das Transportband an den in den Endbereichen angeordneten Tragrollen umgelenkt und sich mit seinem oberen Trum auf den zwischen den Endbereichen angeordneten, weiteren Tragrollen und der Antriebsrolle abstützt, während das untere Trum ausschließlich gegen die Antriebsrolle angelegt wird, kann der Verschleiß durch Abrieb an der Lauffläche des Transportbandes niedrig gehalten werden. Dazu können die Durchmesser der Trag- und Antriebsrollen derart ausgebildet werden, dass das untere Trum zwischen den ersten Tragrollen, welche in den Endbereichen der Förderzone angeordnet sind, ausschließlich die zumindest eine Antriebsrolle tangential berührt.

Vorteilhafte Ausgestaltungen der Stelleinheit sind in den Ansprüchen 2 bis 4 beschrieben. Die Stelleinheit wird vorzugsweise ohne Hilfsenergie, insbesondere elektrische Energie, betätigt. Dadurch kann die erfindungsgemäße Fördervorrichtung sehr wirtschaftlich betrieben werden. Der Reibschluss zwischen der Antriebsrolle und dem Transportband, wird bei bekanntem Reibungsbeiwert zwischen der Oberfläche der Antriebsrolle, dem Transportband und dem Anpresselement direkt abhängig von der Anstellkraft des Anpresselementes auf das untere Trum des Transportbandes eingestellt. Somit kann alleinig durch Auslegung der Anstellkraft und der dadurch definierten Anpresskraft, mit der das untere Trum gegen einen Eingriffsabschnitt der Antriebsrolle gelegt wird, der Reibschluss zwischen der Antriebsrolle und dem Transportband optimiert und die Fördervorrichtung, ohne wesentliche Vergrößerung und Änderung des Grundaufbaus der Stelleinheit, sehr einfach an unterschiedliche Gewichtsklassen der Stückgüter angepasst werden. Ist das Anpresselement gelenkig mit einem um eine horizontale Achse schwenkbaren Lagerarm verbunden, wird eine gezielte Bewegung des Anpresselementes entlang einer bogenförmigen Bewegungsbahn ohne komplexe, zusätzliche Führungen erreicht und somit eine besonders wirtschaftliche und störunanfällige Stelleinheit geschaffen.

Eine vorteilhafte Ausgestaltung der Erfindung ist auch in Anspruch 5 beschrieben, da von den Aufnahmebereichen beispielsweise durch Abrieb am Transportband oder dem Stückgut entstandene Schmutzpartikel (Verunreinigung) zumindest temporär aufgenommen werden. Dadurch wird über die gesamte Einsatzdauer der Fördervorrichtung eine zuverlässige Reibschlussverbindung zwischen dem Anpresselement und dem unteren Trum des Transportbandes erreicht und das Antriebsmoment von der Antriebsrolle auf das Transportband zuverlässig übertragen.

Eine besonders günstige Anordnung des Anpresselementes und der Antriebsrolle ist im Anspruch 6 beschrieben. Durch diese Anordnung wird im Berührungsbereich zwischen dem Anpresselement, dem Transportband und der Antriebsrolle die Anstellkraft vom Anpresselement auf das untere Trum des Transportbandes exakt entlang einer parallel zur Rollenachse verlaufenden Scheitellinie an der Unterseite der Antriebsrolle eingeleitet und dabei das untere Trum des Transportbandes mit einer hohen Anpresskraft gegen die Antriebsrolle gedrückt, sodass ein hohes Antriebsmoment von der Antriebsrolle auf das Transportband übertragen werden kann.

Gemäß der Ausführung nach Anspruch 7 kann die Fördervorrichtung besonders vorteilhaft als Stauförderer ausgebildet werden.

Eine einfache Bauweise der Fördervorrichtung ergibt sich durch die Ausführung nach Anspruch 8.

Schließlich wird durch die Ausgestaltungen gemäß den Ansprüchen 9 und 10 sichergestellt, dass das Stückgut auf dem Transportweg zwischen dem ersten Endbereich und zweiten Endbereich mit seinem Gewicht entweder auf zumindest einer der Tragrollen, welche in den End bereichen angeordnet sind, und der Antriebsrolle oder auf beiden Tragrollen, welche in den Endbereichen angeordnet sind, und der Antriebsrolle auflastet.

Zum besseren Verständnis der Erfindung wird diese anhand der nachfolgenden Figuren näher erläutert.

Es zeigen jeweils in stark vereinfachter Darstellung:
- Fig. 1: eine erfindungsgemäßen Fördervorrichtung mit einer ersten Ausführungsvariante einer Stelleinheit in Draufsicht;
- Fig. 2: die Fördervorrichtung geschnitten gemäß den Linien II - II in Fig. 1;
- Fig. 3: die Fördervorrichtung geschnitten gemäß den Linien III - III in Fig. 1;
- Fig. 3a: eine Ausschnittsvergrößerung aus Fig. 3;
- Fig. 4: die Fördervorrichtung geschnitten gemäß den Linien IV - IV in Fig. 1;
- Fig. 5: eine erfindungsgemäßen Fördervorrichtung mit einer zweiten Ausführungsvariante einer Stelleinheit in Draufsicht;
- Fig. 6: eine Seitenansicht der Stelleinheit gemäß der Ausführung in Fig. 5;
- Fig. 7: eine erfindungsgemäßen Fördervorrichtung mit einer dritten Ausführungsvariante einer Stelleinheit in Draufsicht;
- Fig. 8: eine Seitenansicht der Stelleinheit gemäß der Ausführung in Fig. 7.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

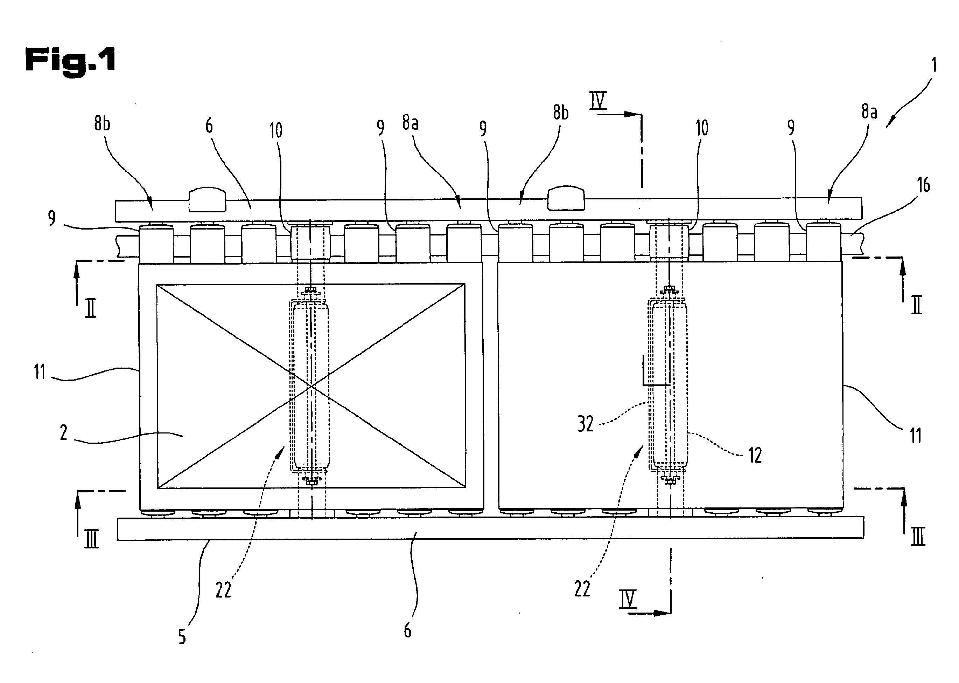

In den gemeinsam beschriebenen Fig. 1 bis 3 ist ein Ausschnitt aus einer Fördervorrichtung 1 zum Transport von Stückgütern 2 in einer ersten Ausführungsform gezeigt. Die Fördervorrichtung 1 weist zumindest einen Förderabschnitt auf. Nach gezeigter Ausführung ist die Fördervorrichtung 1 längs eines Transportweges der Stückgüter 2 in Förderrichtung 3 in mehrere hintereinander ausgebildete Förderzonen 4a, 4b unterteilt. Ist die Fördervorrichtung 1 ein - Stauförderer, bilden die Förderzonen 4a, 4b Stauplätze, deren Länge in etwa einer Stückgutlänge entspricht.

Die Fördervorrichtung 1 weist einen Rahmen 5 mit zwei in Förderrichtung 3 verlaufenden und den Transportweg seitlich begrenzenden Längsträgern 6 auf, die über mehrere in Förderrichtung 3 gesehen, voneinander beabstandet angeordnete, schematisch dargestellte Querträger 7 verbunden sind und somit auf Abstand gehalten werden. Die Längsträger 6 sind im Querschnitt beispielsweise C-förmig gestaltet.

Jede Förderzone 4a, 4b weist zumindest in ihren relativ zur Förderrichtung 3 gegenüberliegenden Endbereichen 8a, 8b am Rahmen 5 drehbar gelagerte Tragrollen 9, mindestens eine zwischen diesen am Rahmen 5 drehbar gelagerte Antriebsrolle 10 und ein um die Trag- und Antriebsrollen 9, 10 geführtes, endlos umlaufendes Transportband 11 sowie ein noch näher zu beschreibendes Anpresselement 12 (Führungselement) auf. Wie in den Fig. gezeigt, sind entsprechend der Länge einer Förderzone 4a, 4b auch noch zwischen den gegenüberliegenden Endbereichen 8a, 8b Tragrollen 9 vorgesehen. Anstatt der zwischen den gegenüberliegenden Endbereichen 8a, 8b vorgesehenen Tragrollen 9 können auch Gleitbleche angeordnet werden. Nach beiden Ausführungen liegt das obere Trum 13 auf einer entweder von den Tragrollen 9 oder den Gleitblechen ausgebildeten Auflagefläche auf. Die Tragrollen 9 als solche sind nicht angetrieben und frei drehbar. Das von der Antriebsrolle 10 angetriebene Transportband 11 bildet an seinem oberen Trum 13 eine Förderebene 14 für den Transport der Stückgüter 2 entlang der Förderzonen 4a, 4b aus.

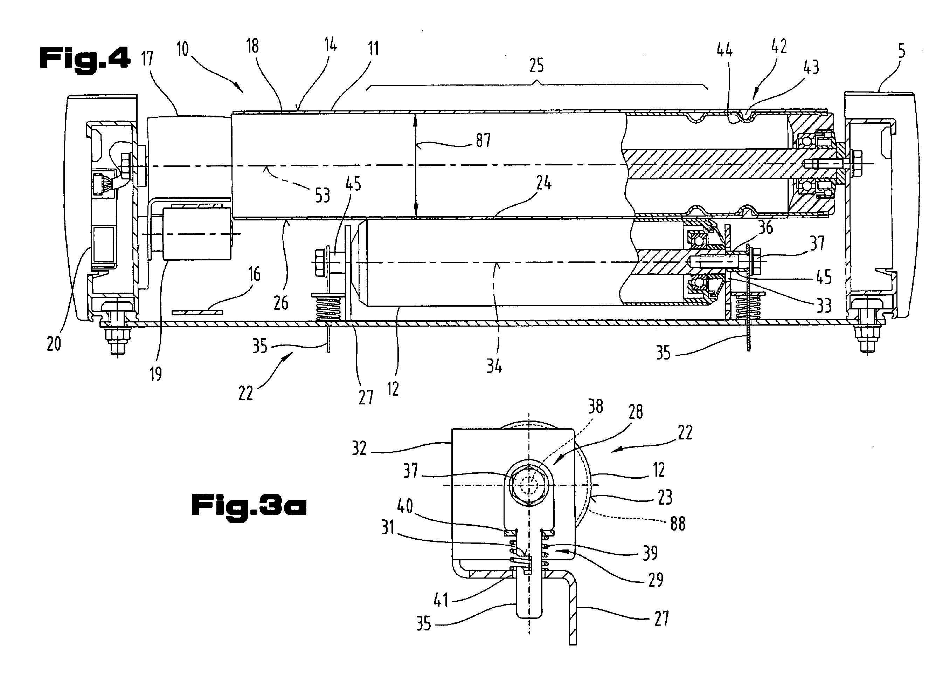

Ist die Fördervorrichtung 1 ein Stauförderer, ist zusätzlich in jeder Förderzone 4a, 4b ein das Stückgut 2, z.B. ein Ladehilfsmittel, wie Karton, Palette, Kiste, etc. erfassender, mechanischer oder akustischer, optischer (berührungslos wirkender) Sensor 15 vorgesehen. Der mechanische Sensor ist beispielsweise durch eine in den Transportweg der Stückgüter 2 hineinragende Schaltklappe gebildet. Der gezeigte Sensor ist beispielsweise durch eine photoelektrische Zelle, insbesondere eine Lichtschranke, gebildet. Mittels der Sensoren 15 werden die Stückgüter 2 erfasst und Sensorsignale an eine in Fig. 4 schematisch dargestellte Steuervorrichtung 20 gesendet, welche die Antriebsrolle 10 ansteuert.

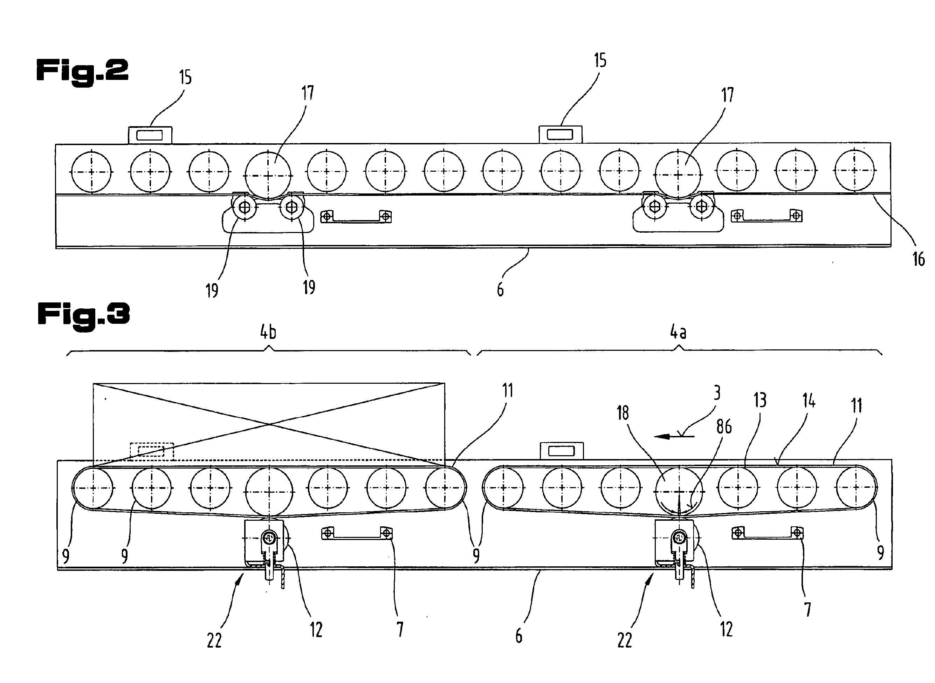

Wie in Fig. 1 und 2 ersichtlich, weist die Fördervorrichtung 1 ein unterhalb der Förderebene 14 angeordnetes und sich entlang der Förderzonen 4a, 4b über die gesamte Länge der Fördervorrichtung 1 erstreckendes Antriebsmittel (Zugmittel) auf. Das Antriebsmittel ist beispielsweise durch einen kontinuierlich umlaufenden Antriebsriemen 16 gebildet, welcher vorzugsweise von einem Elektroantrieb angetrieben wird.

Die Antriebsrolle 10, wie sie in Fig. 4 dargestellt ist, weist nach diesem Ausführungsbeispiel eine hohlen Kupplungsrolle 17 und einen hohlen Rollenkörper 18 auf, die je auf einer feststehenden und am Rahmen 5 gehaltenen Achse drehbar gelagert sind. Die Kupplungsrolle 17 wird durch den Antriebsriemen 16 kontinuierlich angetrieben und ist über eine mechanisch, insbesondere reibschlüssig wirkende Kupplung (nicht gezeigt) mit dem antreibbaren Rollenkörper 18 kuppelbar. Die Kupplung weist über eine elektrisch betätigbare Verstellvorrichtimg relativ zueinander verstellbare Kupplungsteile auf, wobei die Verstellvorrichtung von der Steuervorrichtung 20 angesteuert wird. Die Kupplungsrolle 17 umfasst einen Ringmagneten, eine Spule (Verstellvorrichtung) und an einer, dem antreibbaren Rollenkörper 18 zugekehrten Stirnfläche einen Reibbelag (erster Kupplungsteil). Der antreibbare Rollenkörper 18 umfasst einen auf einer Verzahnung axial verschiebbaren Anker (zweiter Kupplungsteil), der mit dem Rollenkörper 18 drehfest verbunden ist. Soll der Rollenkörper 18 angetrieben werden, wird die Spule des Ringmagneten erregt, wodurch der Anker am Reibbelag anliegt und über Reibschluss zwischen dem Reibbelag und dem Anker das Antriebsmoment von der Kupplungsrolle 17 auf den Rollenkörper 18 überträgt. Die Antriebsrolle 10 kann außer der elektrisch betätigbaren Kupplung ferner mit einer elektrisch betätigbaren Bremsvorrichtung ausgestattet sein, die ihrerseits von der Steuervorrichtung 20 angesteuert wird. Eine solche Antriebsrolle 10 ist beispielsweise aus der EP 1 132 321 B1 bekannt.

Nach einer anderen Ausführung, kann die Antriebsrolle 10 durch eine motorbetriebene Rolle gebildet sein, die einen auf einer Achse über eine Antriebseinheit, insbesondere einen Gleichstrom- oder Wechselstrommotor, drehbar gelagerten hohlen Rollenkörper 18 aufweist. Eine Kupplungsrolle und ein Antriebsriemen, wie sie nach obiger Ausführung notwendig ist, können nach dieser Ausführung entfallen. Eine solche Antriebsrolle 10 ist beispielsweise aus der EP 1 671 901 B1, US 6,244,427 B1 oder US 6,710,505 B1 bekannt.

Der endlos umlaufende Antriebsriemen 16 ist im Bereich einer jeden Antriebsrolle 10 durch die Kupplungsrolle 17 und Andrückrollen 19 ausgelenkt und umschließt die Kupplungsrolle 17 in einem Winkel zwischen 10 ° und 30 °.

Sollen die Stückgüter 2 entlang der Fördervorrichtung 1 gestaut werden, wird vorerst ein erstes Stückgut 2 in der Förderzone 4b gestoppt, wie in der Fig. 3 eingetragen, und vom Sensor 15 das erste Stückgut 2 erfasst sowie ein Sensorsignal an die Steuervorrichtung 20 gesendet. Die Kupplung in der Förderzone 4a erhält von der Steuervorrichtung 20 ein Steuersignal, mit welchem die Kupplung in ihre eingekuppelte Schaltstellung geschalten wird. Wird ein zweites Stückgut 2 in der Förderzone 4a antransportiert, wird vom Sensor 15 das zweite Stückgut 2 erfasst sowie ein Sensorsignal an die Steuervorrichtung 20 gesendet. Die Steuervorrichtung 20 verarbeitet die Steuersignale der Förderzonen 4a, 4b und erhält die Kupplung in der Förderzone 4a ein Steuersignal, durch welches die Kupplung in ihre ausgekuppelte Schaltstellung geschalten wird. Dabei wird der antreibbare Rollenkörper 18 von der kontinuierlich angetriebenen Kupplungsrolle 17 abgekoppelt und somit der Rollenkörper 18 und das zweite Stückgut 2 in der Förderzone 4a in Stillstand versetzt. Dieser Vorgang kann entlang der Fördervorrichtung 1 beliebig fortgesetzt werden.

Es sei darauf hingewiesen, daß die Stückgüter 2 entlang der Fördervorrichtung 1 entweder aneinanderstoßend aufgestaut oder relativ zur Förderrichtung 3 mit gegenseitigem Abstand aufgestaut werden können. Dies ist dem Fachmann als staudruckloses Speichern und Fördern von Stückgütern 2 geläufig.

In den gemeinsam beschriebenen Fig. 3, 3a und 4 ist eine erste Ausführung einer Stelleinheit 22 gezeigt, mittels welcher das Anpresselement 12 (Führungselement) mit seiner zylindrischen, glatte Eingriffsfläche 23 gegen das untere Trum 24 des Transportbandes 11 angestellt und dabei das untere Trum 24 gegen einen Eingriffsabschnitt 25 an der Antriebsrolle 10 angedrückt wird. Das untere Trum 24 bildet eine Rücklaufebene 26 aus und ist die Stelleinheit 22 unterhalb der Rücklaufebene 26 angeordnet. Die Stelleinheit 22 ist auf einem Montageträger 27 gelagert, die mit den Längsträger 6 des Rahmens 5 verbunden ist.

Die Stelleinheit 22 weist eine Lagervorrichtung 28 und eine Anpressvorrichtung 29 auf. Die Lagervorrichtung 28 ist durch eine ortsfeste Halterung 32 und eine an dieser angeordnete Führung 33 gebildet. Die Halterung 32 umfasst um die Breite des Anpresselementes 12 voneinander distanziert am Montageträger 27 befestigte Laschen, in denen jeweils die Führung 33 angeordnet ist. Die Führungen 33 erstrecken sich als Langloch zwischen dem unteren und oberen Ende der Laschen bevorzugt vertikal zur Förderebene 14. Das Anpresselement 12 ist nach gezeigter Ausführung durch eine Stützrolle gebildet, welche auf einer Lagerachse 34 über Wälzlager, beispielsweise Kugellager, oder Gleitlager drehbar gelagert ist. Die Stützrolle ist frei drehbar und nicht angetrieben.

Die gegenüberliegenden Enden der Lagerachse 34 sind über Verbindungsachsen 36 mit den Betätigungselementen 35 der Anpressvorrichtung 29 verbunden. Die Verbindungsachsen 36 durchsetzten dabei die Führungen 33. Das Anpresselement 12 ist in axialer Richtung daher über die Verbindungsachsen 36 an den Betätigungselementen 35 gehalten. Nach gezeigter Ausführung bilden Schrauben 37 an deren Schaft jeweils die Verbindungsachsen 36. Vorzugsweise ist auf jeder Verbindungsachse 36 zwischen der Stirnseite der Lagerachse 34 und dem Betätigungselement 35 eine Führungsbuchse 45 angeordnet, sodass das Anpresselement 12 an den Führungen 33 in Förderrichtung 3 im Wesentlichen ohne Spiel geführt ist.

Nach einer anderen, nicht gezeigten Ausführung sind die gegenüberliegenden Enden der Lagerachse 34 mit den Betätigungselementen 35 verbunden und durchsetzten dabei die Fühnmgen 33 in der Halterung 32 sowie eine Lagerbohrung 38 in den Betätigungselementen 35. Das Anpresselement 12 ist in axialer Richtung durch, an den Betätigungselementen 35 vorragenden Enden der Lagerachse 34 angeordnete Sicherungselemente gehalten.

Eine Lagerachse 34 (Führungsachse) des Anpresselementes 12 und eine Rollenachse 53 der Antriebsrolle 10 verlaufen parallel zueinander und sind in der Senkrechten vertikal übereinander angeordnet.

Die Anpressvorrichtung 29 umfasst die, jeweils über eine Lagerbohrung 38 bzw. ein Lagerauge mit der Verbindungsachse 36 oder den Enden der Lagerachse 34 verbundenen Betätigungselemente 35 und die Betätigungselemente 35 umgebende Federn 39 sowie mit dem jeweiligen Betätigungselement 35 fest verbundene Auflagen 40, an der die Federn 39 abgestützt sind. Die Betätigungselemente 35 sind plattenförmig gestaltet und in Führungen 41 gelagert, die nach gezeigter Ausführung durch im Montageträger 27 vorgesehene Führungsschlitze gebildet sind. Die Betätigungselemente 35 sind jeweils mit einer Freistellung 31 versehen, um eine einfachere Montage der Stelleinheit 22 zu ermöglichen.

Wie in der Fig. 4 ersichtlich, ist die Feder 39 zwischen der Auflage 40 und dem Montageträger 27 vorgespannt, sodass das Anpresselement 12 mit einer in senkrechter Richtung auf die Förderebene 14 definierten Anstellkraft beaufschlagt und dabei das untere Trum 24 vom Anpresselement 12 gegen den Eingriffsabschnitt 25 der Antriebsrolle 10 mit einer annähernd konstanten Anpresskraft angedrückt wird.

Wie in Fig. 4 ersichtlich, kann zur Seitenführung des Transportbandes 11 zwischen diesem und der Antriebsrolle 10 eine Führungsanordnung 42 vorgesehen sein, welche durch formschlüssig ineinander eingreifende Führungsteile 43, 44 gebildet ist. Der erste Führungsteil 43 erstreckt sich, an einer der Antriebsrolle 10 zugewandten Lauffläche über die gesamte Länge des Transportbandes 11 und weist von der Lauffläche in Richtung der Antriebsrolle 10 geneigt aufeinander zulaufende Seitenführungsflächen auf. Der zweite Führungsteil 43 ist durch eine an Antriebsrolle 10 vertieft umlaufende Führungsnut gebildet, in welche der erste Führungsteil 43 vorragt.

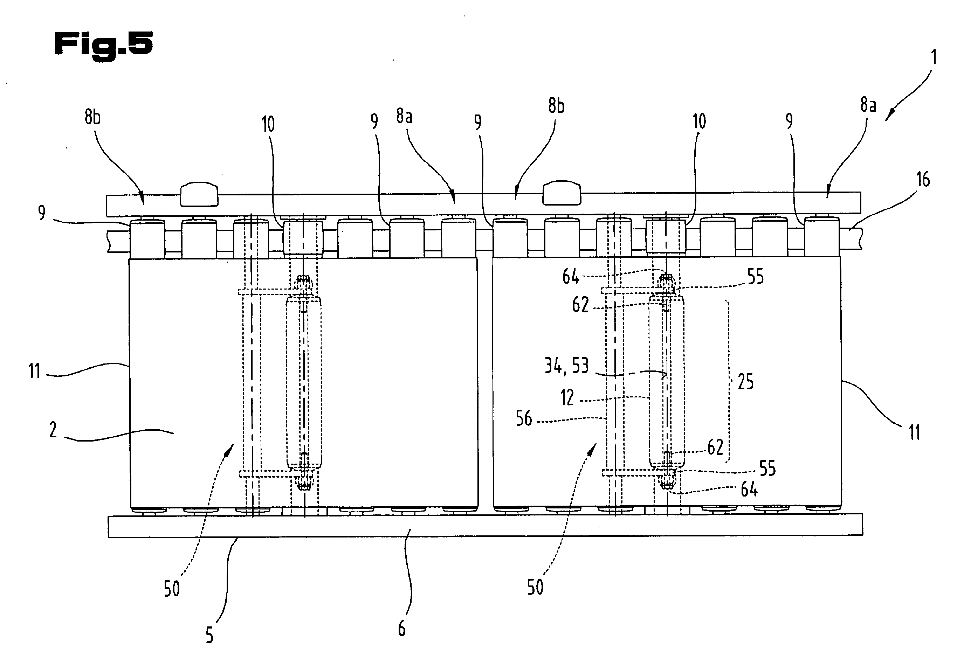

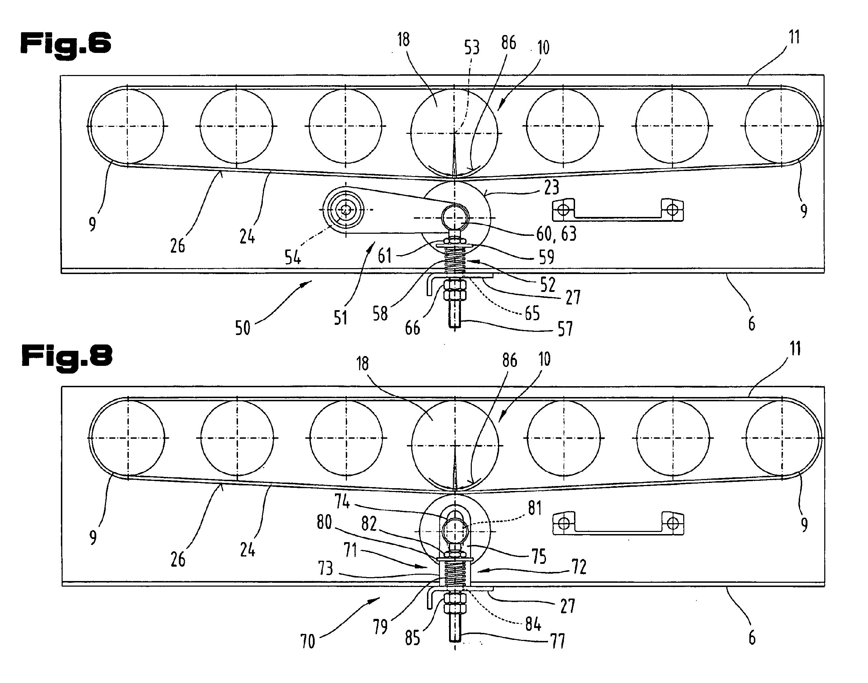

In den gemeinsam beschriebenen Fig. 5 und 6 ist eine zweite Ausführung einer Stelleinheit 50 gezeigt, mittels welcher das Anpresselement 12 (Führungselement) mit seiner zylindrischen, glatten Eingriffsfläche 23 gegen das untere Trum 24 des Transportbandes 11 angestellt und dabei das untere Trum 24 gegen einen Eingriffsabschnitt 25 an der Antriebsrolle 10 angedrückt wird. Das untere Trum 24 bildet eine Rücklaufebene 26 aus und ist die Stelleinheit 50 unterhalb der Rücklaufebene 26 angeordnet. Die Stelleinheit 50 ist auf dem Montageträger 27 gelagert, die mit den Längsträgern 6 des Rahmens 5 verbunden ist.

Die Stelleinheit 50 weist eine Lagervorrichtung 51 und eine Anpressvorrichtung 52 auf. Die Lagervorrichtung 51 weist um eine parallel und exzentrisch zu einer Rollenachse 53 der Antriebsrolle 10 verlaufende Lagerachse 54 verschwenkbare, laschenartige Lagerarme 55 auf, welche jeweils mit ihrem ersten Ende auf einer Stange 56 angeordnet und mit ihrem zweiten Ende gelenkig mit einem Betätigungselement 57 der Anpressvorrichtung 52 verbunden sind. Die Lagerarme 55 sind zumindest um die Breite des Anpresselementes 12 voneinander distanziert auf der Stange 56 angeordnet. Die Stange 56 ist mit den Längsträgern 6 des Rahmens 5 verbunden. Die Lagerarme 55 können entweder mit der Stange 56 drehfest verbunden werden, insbesondere verschweißt, oder auf der Stange 56 drehbar gelagert sein. Nach ersterer Ausführung muss die Stange 56 zwischen den Längsträger 6 drehbar gelagert sein, während nach der zweiten Ausführung zwischen der Stange 56 und den Lagerarmen 55 eine Gelenkverbindung erforderlich ist, insbesondere sind die Lagerarme 55 an ihrem ersten Ende mit Lagerbuchsen versehen.

Die Anpressvorrichtung 52 umfasst den Enden des Anpresselementes 12 zugeordnete Betätigungselemente 57 und auf diesen angeordnet, eine Feder 58 und eine Auflage 59; an letzterer die Feder 58 abgestützt ist. Die Betätigungselemente 57 umfassen jeweils eine Lagerbohrung 60. Wie in der Fig. 6 ersichtlich, ist die Auflage 59 gegen eine Schraubenmutter 61 abgestützt.

Die gegenüberliegenden Enden der Lagerachse 34 des Anpresselementes 12 sind über nur in Fig. 5 eingetragene Verbindungsachsen 62 gelenkig mit den Betätigungselementen 57 und den Lagerarmen 55 verbanden, wobei die Verbindungsachsen 62 jeweils die Lagerbohrungen 60,63 bzw. Lageraugen der Betätigungselemente 57 und Lagerarme 55 durchsetzen. Das Anpresselement 12 ist in axialer Richtung durch Schrauben 64 gehalten, deren Schaft jeweils die Verbindungsachen 62 bildet.

Das Anpresselement 12 ist nach gezeigter Ausführung durch eine Stützrolle gebildet, welche auf der Lagerachse 34 über Wälzlager, beispielsweise Kugellager, oder Gleitlager drehbar gelagert ist. Die Stützrolle ist frei drehbar und nicht angetrieben.

Nach einer anderen, nicht gezeigten Ausführung sind die gegenüberliegenden Enden der Lagerachse 34 mit den Betätigungselementen 35 verbunden und durchsetzten dabei die Lagerbohrungen 60,63 bzw. Lageraugen der Betätigungselemente 57 und Lagerarme 55. Das Anpresselement 12 ist in axialer Richtung durch, an den Betätigungselementen 57 vorragenden Enden der Lagerachse 34 angeordnete Sicherungselemente gehalten.

Eine Lagerachse 34 (Führungsachse) des Anpresselementes 12 und eine Rollenachse 53 der Antriebsrolle 10 verlaufen parallel zueinander und sind in vertikaler Richtung übereinander angeordnet.

Die Betätigungselemente 57 weisen jeweils einen zylindrischen Schaft auf, der in einer Führung 65 gelagert ist, die nach gezeigter Ausführung durch im Montageträger 27 vorgesehene Führungsbohrungen gebildet sind. Zusätzlich können die Betätigungselemente 57 mit einem Anschlagelement 66 versehen sein, welches nach gezeigter Ausführung durch eine Schraubenmutter und eine Kontermutter gebildet ist. Durch das Anschlagelement 66 kann der Verstellweg des Betätigungselementes 57 in senkrechter Richtung auf die Förderebene 14 begrenzt werden.

Die Feder 58 ist zwischen der Auflage 59 und dem Montageträger 27 vorgespannt, sodass das Anpresselement 12 mit einer in senkrechter Richtung auf die Förderebene 14 definierten Anstellkraft beaufschlagt und dabei das untere Trum 24 vom Anpresselement 12 gegen den Eingriffsabschnitt 25 der Antriebsrolle 10 mit einer annähernd konstanten Andrückkraft angedrückt wird.

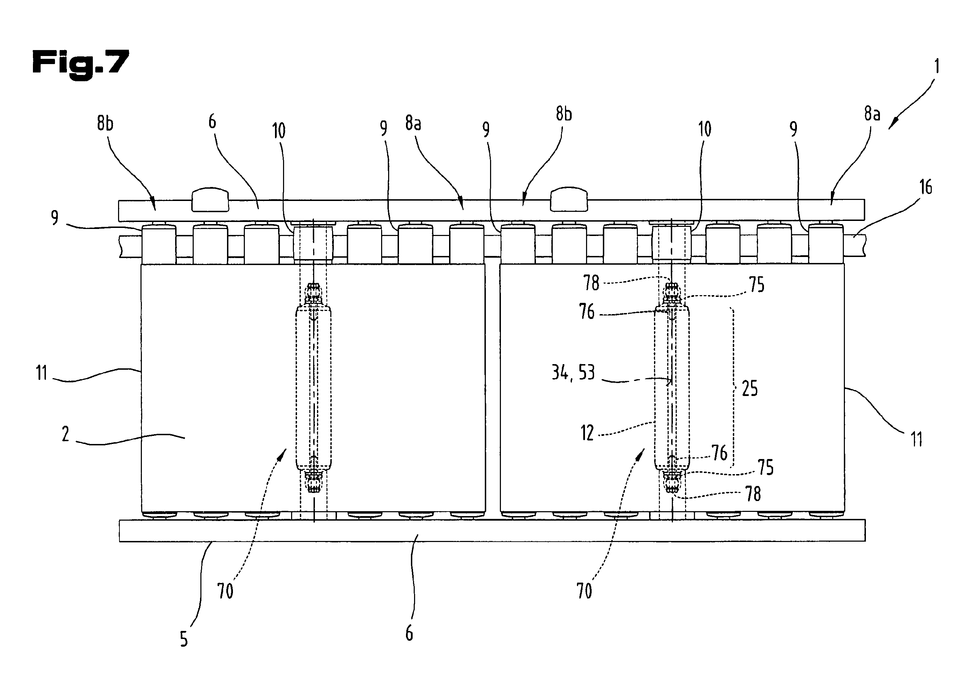

In den gemeinsam beschriebenen Fig. 7 und 8 ist eine dritte Ausführung einer Stelleinheit 70 gezeigt, mittels welcher das Anpresselement 12 (Führungselement) mit seiner zylindrischen, glatten Eingriffsfläche 23 gegen das untere Trum 24 des Transportbandes 11 angestellt und dabei das untere Trum 24 gegen einen Eingriffsabschnitt 25 an der Antriebsrolle 10 angedrückt wird. Das untere Trum 24 bildet eine Rücklaufebene 26 aus und ist die Stelleinheit 70 unterhalb der Rücklaufebene 26 angeordnet. Die Stelleinheit 70 ist auf dem Montageträger 27 gelagert, die mit den Längsträgern 6 des Rahmens 5 verbunden ist.

Die Stelleinheit 70 weist eine Lagervorrichtung 71 und eine Anpressvorrichtung 72 auf. Die Lagervorrichtung 71 ist durch eine ortsfeste Halterung 73 und eine an dieser angeordnete Führung 74 gebildet. Die Halterung 73 weist zumindest um die Breite des Anpresselementes 12 voneinander distanziert auf dem Montageträger 27 angeordnete, laschenartige Lagerarme 75 auf, welche jeweils mit einer sich als Langloch zwischen deren unteren und oberen Ende bevorzugt vertikal zur Förderebene 14 erstreckende Führungen 74 versehen sind. Das Anpresselement 12 ist nach gezeigter Ausführung durch eine Stützrolle gebildet, welche auf einer Lagerachse 34 über Wälzlager, beispielsweise Kugellager, oder Gleitlager drehbar gelagert ist. Die Stützrolle ist frei drehbar und nicht angetrieben.

Die gegenüberliegenden Enden der Lagerachse 34 des Anpresselementes 12 sind über nur in Fig. 7 eingetragene Verbindungsachsen 76 mit den Betätigungselementen 77 verbunden, wobei die Verbindungsachsen 76 jeweils die Führungen 74 und die Lagerbohrungen 81 bzw. Lageraugen der Betätigungselemente 77 durchsetzen. Das Anpresselement 12 ist in axialer Richtung durch Schrauben 78 gehalten, deren Schaft jeweils die Verbindungsachsen 76 bildet. Vorzugsweise sind an den Verbindungsachsen 76 nicht gezeigte Führungsbuchsen angeordnet, sodass das Anpresselement 12 an den Führungen 76 in Förderrichtung 3 im Wesentlichen ohne Spiel geführt ist.

Nach einer anderen, nicht gezeigten Ausführung sind die gegenüberliegenden Enden der Lagerachse 34 mit den Betätigungselementen 77 verbunden und durchsetzten dabei die Führungen 74 in der Halterung 73 sowie eine Lagerbohrung 81 in den Betätigungselementen 77. Das Anpresselement 12 ist in axialer Richtung durch, an den Betätigungselementen 77 vorragenden Enden der Lagerachse 34 angeordnete Sicherungselemente gehalten.

Eine Lagerachse 34 (Führungsachse) des Anpresselementes 12 und eine Rollenachse 53 der Antriebsrolle 10 verlaufen parallel zueinander und sind in der Senkrechten vertikal übereinander angeordnet.

Die Anpressvorrichtung 72 umfasst den Enden des Anpresselementes 12 zugeordnete Betätigungselemente 77 und auf diesen angeordnet, eine Feder 79 und eine Auflage 80, an letzterer die Feder 79 abgestützt ist. Die Betätigungselemente 77 umfassen jeweils eine Lagerbohrung 81. Wie in der Fig. 6 ersichtlich, ist die Auflage 80 gegen eine Schraubenmutter 82 abgestützt.

Die Betätigungselemente 77 weisen jeweils einen zylindrischen Schaft auf, der in einer Führung 84 gelagert ist, die nach gezeigter Ausführung durch im Montageträger 27 vorgesehene Führungsbohrungen gebildet sind. Zusätzlich können die Betätigungselemente 77 mit einem Anschlagelement 85 versehen sein, wie oben beschrieben.

Die Feder 79 ist zwischen der Auflage 80 und dem Montageträger 27 vorgespannt, sodass das Anpresselement 12 mit einer in senkrechter Richtung auf die Förderebene 14 definierten Anstellkraft beaufschlagt und dabei das untere Trum 24 vom Anpresselement 12 gegen den Eingriffsabschnitt 25 der Antriebsrolle 10 mit einer annähernd konstanten Andrückkraft angedrückt wird.

Die Stelleinheit 22; 50; 70 ermöglicht durch die Anpressvorrichtung 29; 52; 72 die selbsttätige Nachstellung (ohne Hilfsenergie) des Anpresselementes 12 in senkrechter Richtung auf die Förderebene 14. Das Anpresselement 12 wird mit einer zylindrischen Eingriffsfläche 23 gegen das untere Trum 24 des Transportbandes 11 angestellt und dabei das untere Trum 24 gegen einen Eingriffsabschnitt 25 an der Antriebsrolle 9 mit einer definierten (konstanten) Andrückkraft angelegt. Dadurch können durch Verschleiß, Längenauidehnungen bedingte oder fertigungsbedingte Dickenabweichung des Transportbandes 11 ausgeglichen werden und ist stets ein ausreichend hoher Reibschluss zwischen dem unteren Trum 24 des Transportbandes 11 und der Antriebsrolle 9 hergestellt. Sohin kann ein hohes Drehmoment, insbesondere das Antriebs- und/oder Bremsmoment, von der Antriebsrolle 10 auf das Transportband 11 übertragen werden, auch wenn das Transportband 11 mit seinem unteren Trum 24 im Wesentlichen nur tangential an die Antriebsrolle 10 angelegt und die Antriebsrolle 10 in einem Winkel 86 zwischen 0° und 15° umschließt.

Darüber hinaus ist ein Durchmesser 87 der Antriebsrolle 10 zumindest im Eingriffsabschnitt 25 für das untere Trum 24 größer als der Durchmesser zumindest der zwischen den Endbereichen 8a, 8b angeordneten Tragrollen 9. Das untere Trum 24 wird von der Antriebsrolle 10 relativ zu den Tragrollen 9 ausgelenkt, derart, dass die zwischen den Endbereichen 8a, 8b angeordneten Tragrollen 9 an ihrer Unterseite nicht berührt werden, daher ein Luftspalt zwischen den Tragrollen 9 und dem unteren Trum 24 ausgebildet ist. Andererseits ist es auch möglich, dass die relativ zur Förderrichtung 3 in den gegenüberliegenden Endbereichen 8a, 8b einer Förderzone 4a, 4b angeordneten Tragrollen 9 und die Antriebsrolle 10 denselben Durchmesser aufweisen, der größer ist als der Durchmesser der zwischen den Enden angeordneten Tragrollen 9.

Eine der in den Endbereichen 8a, 8b angeordneten Tragrollen 9 ist zum Spannen des Transportbandes 11 verstellbar am Rahmen 2 gelagert. Die Vorspannung im Transportband 11 kann aus oben genannten Gründen niedrig gewählt werden.

Wie in Fig. 3a in strichlierter Linie eingetragen, kann das Anpresselement 12 an ihrer zylindrischen Eingriffsoberfläche 23 mit einem oder mehreren vertieft angeordneten Anfnahmebereich 88 versehen werden. Die Aufnahmebereiche 88 können, wie gezeigt, durch über den Umfang der Eingriffsoberfläche 23 parallel nebeneinander oder eine entlang einer Schraubenlinie verlaufende gebildet sein. Wie nicht gezeigt, können die Aufnahmenuten andererseits auch diametral gegenüberliegen und parallel zur Längsachse des Anpresselementes 12 verlaufen. Genauso gut können sich erste Aufnahmenuten über den Umfang und zweite Aufnahmenuten parallel zur Längsachse des Anpresselementes 12 erstrecken. Ferner können die Aufnahmebereiche 88 durch ein Oberflächenprofil mit regelmäßig oder unregelmäßig über die Eingriasoberfläche 23 verteilt angeordneten Profilspitzen und Profiltälern gebildet sein, wobei die Profiltäler die Aufnahmebereiche 88 bilden und durch die Profilspitzen begrenzt sind. Durch diese Maßnahmen kann die Verschmutzung an der Eingriffsoberfläche 23 vermindert werden.

Das oben beschriebene Anpresselement 12 ist entweder vollständig oder an seinem äußeren Umfangsabschnitt aus Metall oder aus einem Kunststoff, beispielsweise Polyurethan-Elastomer. Diese zeichnen sich durch ihre schmutzabweisende Eigenschaft, sehr hohe mechanische Festigkeit, hohe Verschleißfestigkeit und gute Beständigkeit gegen Öle und Fette aus.

In den oben beschriebenen Fig. 1 bis 8 sind bevorzugte Ausführungen von Fördervorrichtungen 1 gezeigt, welche jeweils mit einer Stelleinheit 22; 50; 70 ausgestattet sind. Im Rahmen der Erfindung ist es aber genauso gut möglich, dass das Anpresselement 12 ausschließlich über eine Lagervorrichtung einer Stelleinheit ortsfest am Rahmen 5 gelagert ist und mit einer voreingestellten Anstellkraft an das untere Trum 24 angelegt und dabei das untere Trum 24 mit einer Anpresskraft gegen den Eingriffsabschnitt 25 der Antriebsrolle 10 angedrückt ist. Treten beispielsweise durch Verschleiß hervorgerufene Maßänderungen des Transportbandes 11 auf, muss das Anpresselement 12 relativ zur Lagervorrichtung auf das untere Trum 24 manuell zugestellt und eine Anstellkraft eingestellt werden. Hierzu ist die Lagervorrichtung beispielsweise gemäß einer der obigen, ersten oder dritten Ausführung gestaltet und mit einer Führung 33; 74 versehen, entlang welcher das Anpresselement 12 verstellbar ist. Da nach dieser Ausführung der Stelleinheit eine Anpressvorrichtung entfällt, ist eine manuelle Nachstellung des Anpresselementes 12 erforderlich.

Nach einer anderen Ausführung ist das Anpresselement 12 vollständig oder an seinem äußeren Umfangsabschnitt aus einem elastischen Kunststoff, insbesondere einem Elastomer, oder Gummi und wird die Anstellkraft alleinig durch die elastische Materialverformung in radialer Richtung erzeugt, wenn das Anpresselement 12 auf das untere Trum 24 zugestellt wurde.

Auch wenn in den obigen Ausführungen das Anpresselement 12 stets als eine hohlzylindrische Stützrolle gezeigt wurde, die sich parallel zur Rollenachse 53 durchgehend über die gesamte Länge des Eingriffsabschnittes 25 erstreckt, ist es genauso gut möglich, dass das Anpresselement 12 über die Länge des Eingriffsabschnittes 25 mehrere in äquidistanten Abständen auf der parallel zur Rollenachse 53 verlaufenden Lagerachse 34 angeordnete, frei drehbare (ringförmige) Stützrollen aufweist, welche zylindrische Eingriffsflächen ausbilden.

Ferner ist es auch möglich, dass eine Lagerachse 34 vom unterhalb der Rücklaufebene 26 angeordneten Anpresselement 12 und eine Rollenachse 53 der Antriebsrolle 10 nicht in der Senkrechten vertikal übereinander vorgesehen sind. Daher ist das Anpresselement 12 relativ zur Antriebsrolle 10 auf die linke oder rechte Seite und in vertikaler Richtung auf die Förderebene 14 nach oben versetzt angeordnet, sodass das untere Trum 24 vom Anpresselement 12 ausgelenkt wird Ist das Anpresselement 12 eine Stützrolle, so umschließt das untere Trum 24 die Stützrolle in einem Winkel zwischen 5 ° und 30 °, insbesondere zwischen 10° und 20 °.

Es sei auch noch erwähnt, dass innerhalb einer Förderzone 4a, 4b zwischen den in den Endbereichen 8a, 8b angeordneten Tragrollen 9, mehr als eine Antriebsrolle 10, beispielsweise zwei oder drei Antriebsrollen 10 vorgesehen werden können. Die Positionierung der Antriebsrolle(n) 10 kann daher an beliebiger Stelle zwischen den in den Endbereichen 8a, 8b angeordnetten Tragrollen 9 erfolgen. Die Anzahl der zu verwendeten Antriebsrollen 10 wird beispielsweise durch das Gewicht des zu transportierenden Stückgutes 2 und/oder die erforderlichen Beschleunigungswerte bestimmt. Dabei wird das untere Trum 24 über zumindest ein Anpresselement 12 gegen den Eingriffsabschnitt 25 an jeder Antriebsrolle 10 angedrückt. Auch kann jeder Antriebsrolle 10 ein Anpresselement 12 zugeordnet werden. Eine optimale Einstellung der Anstellkraft der/des Anpresselemente(s) auf das Transportband 11 wird erreicht, wenn für das/die Anpresselement(e) eine Stelleinheit(en) vorgesehen ist.

Die Ausführungsbeispiele zeigen mögliche Ausführungsvarianten der Stelleinheit, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

Der Ordnung halber sei abschließend darauf hingewiesen, dass zum besseren Verständnis des Aufbaus der Fördervorrichtung 1 diese bzw. deren Bestandteile teilweise unmaßstäblich und/oder vergrößert und/oder verkleinert dargestellt wurden.

### Bezugszeichenaufstellung

- 1: Fördervorrichtung
- 2: Stückgut
- 3: Förderrichtung
- 4a, 4b: Förderzone
- 5: Rahmen

- 6: Längsträger
- 7: Querträger
- 8a, 8b: Endbereich
- 9: Tragrolle
- 10: Antriebsrolle

- 11: Transportband
- 12: Führungselement
- 13: oberes Trum
- 14: Förderebene
- 15: Sensor

- 16: Antriebsriemen
- 17: Kupplungsrolle
- 18: Rollenkörper
- 19: Andrückrolle
- 20: Steuervorrichtung

- 21:
- 22: Stelleinheit
- 23: Eingriffsfläche
- 24: unteres Trum
- 25: Eingriffsabschnitt

- 26: Rücklaufebene
- 27: Montageträger
- 28: Lagervorrichtung
- 29: Anpressvorrichtung
- 30:

- 31: Freistellung
- 32: Halterung
- 33: Führung
- 34: Lagerachse
- 35: Betätigungselement

- 36: Verbindungsachse
- 37: Schraube
- 38: Lagerbohrung
- 39: Feder
- 40: Auflage

- 41: Führung
- 42: Führungsanordnung
- 43: Führungsteil
- 44: Führungsteil
- 45: Führungsbuchse

- 46:
- 47:
- 48:
- 49:
- 50: Stelleinheit

- 51: Lagervorrichtung
- 52: Anpressvorrichtung
- 53: Rollenachse
- 54: Lagerachse
- 55: Lagerarm

- 56: Stange
- 57: Betätigungselement
- 58: Feder
- 59: Auflage
- 60: Lagerbohrung

- 61: Schraubenmutter
- 62: Verbindungsachse
- 63: Lagerbohrung
- 64: Schraube
- 65: Führung

- 66: Anschlagelement
- 67:
- 68:
- 69:
- 70: Stelleinheit

- 71: Lagervorrichtung
- 72: Anpressvorrichtung
- 73: Halterung
- 74: Führung
- 75: Lagerarm

- 76: Verbindungsachse
- 77: Betätigungselement
- 78: Schraube
- 79: Feder
- 80: Auflage

- 81: Lagerbohrung
- 82: Schraubenmutter
- 83:
- 84: Führung
- 85: Anschlagelement

- 86: Winkel
- 87: Durchmesser
- 88: Aufnahmebereich

## Patentansprüche

1. Fördervorrichtung (1) mit einem Rahmen (5), zumindest einer Förderzone (4a, 4b), Trag- und Antriebsrollen (9,10) und einem um die Trag- und Antriebsrollen (9, 10) geführten, endlos umlaufenden Transportband (11), welches ein unteres Trum (24) und ein oberes Trum (13) aufweist, wobei das untere Trum (24) eine Rücklaufebene (26) und das obere Trum (13) eine Förderebene (14) zum Transport von Stückgütern (2) ausbildet, und die Förderzone (4a, 4b) in ihren gegenüberliegenden Endbereichen (8a, 8b) jeweils eine erste Tragrolle (9) und zwischen den Tragrollen (9) zumindest eine Antriebsrolle (10) mit einem Rollenkörper (18) sowie ein, das Transportband (11) mit seinem unteren Trum (24) gegen den Rollenkörper (18) andrückendes Anpresselement (12) umfasst, und das obere Trum (13) einerseits um die in den gegenüberliegenden Endbereichen (8a, 8b) angeordneten ersten Tragrollen (9) umgelenkt und andererseits auf dem Rollenkörper (18) anliegend geführt ist, **dadurch gekennzeichnet, dass** die Förderzone (4a, 4b) jeweils zwischen der zumindest einen Antriebsrolle (10) und den ersten Tragrollen (9) zweite Tragrollen (9) aufweist, wobei die Antriebsrolle (10) im Rahmen (5) gehalten und das Anpresselement (12) über eine Stelleinheit (22; 50; 70) relativ zur Antriebsrolle (10) verstellbar ist, welche Stelleinheit (22; 50; 70) zwischen dem Anpresselement (12) und dem Rahmen (5) vorgesehen ist, und dass das untere Trum (24) des Transportbandes (11) tangential um den Rollenkörper (18) geführt wird, wobei die Rücklaufebene (26) zwischen der Antriebsrolle (10) und den ersten Tragrollen (9) in einem Abstand unterhalb der zweiten Tragrollen (9) verläuft.

2. Fördervorrichtung nach Anspruch 1, **dadurch gekennzeichnet, dass** die Stelleinheit (22; 50; 70) eine Lagervorrichtung (28; 51; 71) und eine Anpressvorrichtung (29; 52; 72) aufweist, wobei die Anpressvorrichtung (29; 52; 72) zumindest ein das Anpresselement (12) relativ zum Rahmen (5) verstellendes Betätigungselement (35; 57; 77) aufweist.

3. Fördervorrichtung nach Anspruch 2, **dadurch gekennzeichnet, dass** die Lagervorrichtung (28; 71) eine am Rahmen (5) befestigte Halterung (32; 73) und eine Führung (33; 74) aufweist, wobei das Anpresselement (12) relativ zur Halterung (32; 73) entlang der Führung (33; 74) verstellbar ist.

4. Fördervorrichtung nach Anspruch 2, **dadurch gekennzeichnet, dass** die Lagervorrichtung (51) einen, um eine parallel zur Antriebsrolle (10) verlaufende Lagerachse (54) verschwenkbaren Lagerarm (55) aufweist, wobei das Anpresselement (12) gelenkig mit dem Lagerarm (55) verbunden ist.

5. Fördervorrichtung nach Anspruch 1, **dadurch gekennzeichnet, dass** das Anpresselement (12) eine Eingriffsoberfläche (23) mit zumindest einem Aufnahmebereich (88) aufweist.

6. Fördervorrichtung nach Anspruch 1, **dadurch gekennzeichnet, dass** eine Führungsachse (34) des Anpresselementes (12) und eine Rollenachse (53) der Antriebsrollen (10) in der Senkrechten vertikal übereinander angeordnet sind.

7. Fördervorrichtung nach Anspruch 1, **dadurch gekennzeichnet, dass** die Fördervorrichtung (1) in Förderrichtung (3) in mehrere Förderzone (4a, 4b) unterteilt ist und jede Förderzone (4a, 4b) einen Stauplatz bildet.

8. Fördervorrichtung nach einem der Ansprüche 1 bis 7, **dadurch gekennzeichnet, dass** das Anpresselement (12) und/oder die Stelleinheit (22; 50; 70) ausschließlich unterhalb der Rücklaufebene (26) angeordnet ist.

9. Fördervorrichtung nach Anspruch 1, **dadurch gekennzeichnet, dass** ein in Förderrichtung (3) gemessener Abstand zwischen den Tragrollen (9), welche in den gegenüberliegenden Endbereichen (8a, 8b) der Förderzone (4a, 4b) angeordnet sind, etwa der Stückgutlänge eines Stückgutes (2) entspricht.

10. Fördervorrichtung nach Anspruch 1 oder 9, **dadurch gekennzeichnet, dass** ein in Förderrichtung (3) gemessener Abstand zwischen einer der Tragrollen (9), welche in den gegenüberliegenden Endbereichen (8a, 8b) der Förderzone (4a, 4b) angeordnet sind, und der Antriebsrolle (10) kleiner ist als die Stückgutlänge eines Stückgutes (2).

## Claims

1. Conveying apparatus (1) having a frame (5), at least one conveying zone (4a, 4b), supporting and driving rollers (9, 10) and an endlessly circulating conveyor belt (11) guided around the supporting and driving rollers (9, 10) comprising a bottom strand and a top strand (13), the bottom strand (24) forming a return plane (26) and the top strand (13) forming a conveying plane (14) for transporting piece goods (2), and the conveying zone (4a, 4b) comprises at its oppositely lying end regions (8a, 8b) respectively a first supporting roller (9) and at least one driving roller (10) with a roller body (18) between the supporting rollers (9) and a pressing element (12) pressing the conveyor belt (11) against the roller body (18) by means of its bottom strand (24), and the top strand (13) is deflected around the first supporting rollers (9) disposed in the oppositely lying end regions (8a, 8b) on the one hand and is guided lying on the roller body (18) on the other hand, **characterised in that** the conveying zone (4a, 4b) has second supporting rollers (9) respectively between the at least one driving roller (10) and the first supporting rollers (9), and the driving roller (10) is retained in the frame (5) and the pressing element (12) is displaceable relative to the driving roller (10) by means of an actuator unit (22; 50; 70), which actuator unit (22; 50; 70) is disposed between the pressing element (12) and the frame (5), and the bottom strand (24) of the conveyor belt (11) is guided tangentially around the roller body (18), and the return plane (26) extends between the driving roller (10) and the first supporting rollers (9) at a distance below the second supporting rollers (9).

2. Conveying apparatus as claimed in claim 1, **characterised in that** the actuator unit (22; 50; 70) has a bearing device (28; 51; 71) and a pressing device (29; 52; 72), and the pressing device (29; 52; 72) has at least one operating element (35; 57; 77) displacing the pressing element (12) relative to the frame (5).

3. Conveying apparatus as claimed in claim 2, **characterised in that** the bearing device (28; 71) has a holder (32; 73) secured to the frame (5) and a guide (33; 74), and the pressing element (12) is displaceable relative to the holder (32; 73) along the guide (33; 74).

4. Conveying apparatus as claimed in claim 2, **characterised in that** the bearing device (51) has a bearing arm (55) which can be pivoted about a bearing axis (54) extending parallel with the driving roller (10), and the pressing element (12) is articulatingly connected to the bearing arm (55).

5. Conveying apparatus as claimed in claim 1, **characterised in that** the pressing element (12) has a locating surface (23) with at least one receiving region (88).

6. Conveying apparatus as claimed in claim 1, **characterised in that** a guide axis (34) of the pressing element (12) and a roller axis (53) of the driving rollers (10) are disposed vertically one above the other in the vertical.

7. Conveying apparatus as claimed in claim 1, **characterised in that** the conveying apparatus (1) is divided into several conveying zones (4a, 4b) in the conveying direction (3) and each conveying zone (4a, 4b) forms an accumulation space.

8. Conveying apparatus as claimed in one of claims 1 to 7, **characterised in that** the pressing element (12) and/or the actuator unit (22; 50; 70) is disposed exclusively underneath the return plane (26).

9. Conveying apparatus as claimed in claim 1, **characterised in that** a distance measured in the conveying direction (3) between the supporting rollers (9) disposed in the oppositely lying end regions (8a, 8b) of the conveying zone (4a, 4b) approximately corresponds to the piece good length of a piece good (2).

10. Conveying apparatus as claimed in claim 1 or 9, **characterised in that** a distance measured in the conveying direction (3) between one of the supporting rollers (9) disposed in the oppositely lying end regions (8a, 8b) of the conveying zone (4a, 4b) and the driving roller (10) is shorter than the piece good length of a piece good (2).

## Revendications

1. Convoyeur (1), comprenant un châssis (5), au moins une zone de convoyage (4a, 4b), des galets porteurs et d'entraînement (9, 10) et une bande de transport (11) circulant sans fin, guidée autour des galets porteurs et d'entraînement (9, 10) et présentant un brin inférieur (24) et un brin supérieur (13), dans lequel le brin inférieur (24) réalise un plan de retour (26) et le brin supérieur (13) réalise un plan de convoyage (14) pour transporter des marchandises de détail (2), et la zone de convoyage (4a, 4b) comprend dans ses zones d'extrémité opposées (8a, 8b) respectivement un premier galet porteur (9) et entre les galets porteurs (9) au moins un galet d'entraînement (10) avec un corps de galet (18), ainsi qu'un élément de pression (12) pressant la bande de transport (11) avec son brin inférieur (24) contre le corps de galet (18), et dans lequel le brin supérieur (13) est d'une part guidé en étant renvoyé autour des premiers galets porteurs (9) disposés dans les zones d'extrémité opposées (8a, 8b) et d'autre part guidé de manière adjacente sur le corps de galet (18),
**caractérisé en ce que** la zone de convoyage (4a, 4b) présente respectivement entre ledit au moins un galet d'entraînement (10) et les premiers galets porteurs (9) des deuxièmes galets porteurs (9), dans lequel le galet d'entraînement (10) est retenu dans le châssis (5) et l'élément de pression (12) est réglable par rapport au galet d'entraînement (10) par l'intermédiaire d'une unité de réglage (22 ; 50 ; 70), ladite unité de réglage (22 ; 50 ; 70) étant prévue entre l'élément de pression (12) et le châssis (5), et **en ce que** le brin inférieur (24) de la bande de transport (11) est guidé de manière tangentielle autour du corps de galet (18), le plan de retour (26) s'étendant entre le galet d'entraînement (10) et les premiers galets porteurs (9) à une certaine distance au-dessous des deuxièmes galets porteurs (9).

2. Convoyeur selon la revendication 1, **caractérisé en ce que** l'unité de réglage (22 ; 50 ; 70) présente un dispositif formant palier (28 ; 51 ; 71) et un dispositif de pression (29 ; 52 ; 72), dans lequel le dispositif de pression (29 ; 52 ; 72) présente au moins un élément d'actionnement (35 ; 57 ; 77) ajustant l'élément de pression (12) par rapport au châssis (5).

3. Convoyeur selon la revendication 2, **caractérisé en ce que** le dispositif formant palier (28 ; 71) présente une fixation (32 ; 73) fixée au châssis (5) et un guidage (33 ; 74), dans lequel l'élément de pression (12) est réglable par rapport à la fixation (32 ; 73) le long du guidage (33 ; 74).

4. Convoyeur selon la revendication 2, **caractérisé en ce que** le dispositif formant palier (51) présente un bras de palier (55) pivotant autour d'un axe de palier (54) s'étendant en parallèle au galet d'entraînement (10), dans lequel l'élément de pression (12) est relié de manière articulée au bras de palier (55).

5. Convoyeur selon la revendication 1, **caractérisé en ce que** l'élément de pression (12) présente une surface de mise en prise (23) avec au moins une zone de réception (88).

6. Convoyeur selon la revendication 1, **caractérisé en ce qu'**un axe de guidage (34) de l'élément de pression (12) et un axe de galet (53) des galets d'entraînement (10) sont disposés verticalement l'un au-dessus de l'autre sur une ligne perpendiculaire.

7. Convoyeur selon la revendication 1, **caractérisé en ce que** le convoyeur (1) est divisé en plusieurs zones de convoyage (4a, 4b) dans la direction de convoyage (3), et chaque zone de convoyage (4a, 4b) constitue un emplacement de retenue.

8. Convoyeur selon l'une quelconque des revendications 1 à 7, **caractérisé en ce que** l'élément de pression (12) et/ou l'unité de réglage (22 ; 50 ; 70) est/sont disposé(s)/disposée(s) exclusivement au-dessous du plan de retour (26).

9. Convoyeur selon la revendication 1, **caractérisé en ce qu'**une distance mesurée dans la direction de convoyage (3) entre les galets porteurs (9), qui sont disposés dans les zones d'extrémité opposées (8a, 8b) de la zone de convoyage (4a, 4b), correspond approximativement à la longueur de marchandise de détail d'une marchandise de détail (2).

10. Convoyeur selon la revendication 1 ou 9, **caractérisé en ce qu'**une distance mesurée dans la direction de convoyage (3) entre l'un des galets porteurs (9), qui sont disposés dans les zones d'extrémité opposées (8a, 8b) de la zone de convoyage (4a, 4b), et le galet d'entraînement (10) est inférieure à la longueur de marchandise de détail d'une marchandise de détail (2).
